# EUROPÄISCHE PATENTSCHRIFT

(11) **EP 0 388 390 B1**
(45) Veröffentlichungstag und Bekanntmachung des Hinweises auf die Patenterteilung: **28.07.1993**
(21) Anmeldenummer: 90890002.0
(22) Anmeldetag: 05.01.1990
(51) Int. Cl.: G01D 5/36, G01D 5/34

(54) **Inkrementales Messsystem**
Incremental measuring system
Système de mesure incrémentiel

(30) Priorität: 09.02.1989 AT 275/89
(43) Veröffentlichungstag der Anmeldung: 19.09.1990
(73) Patentinhaber: SENTOP RIEDER & SCHWAIGER Gesellschaft m.b.H., A-5121 Tarsdorf 117 (AT)
(72) Erfinder: Rieder, Heinz, A-5110 Oberndorf (AT); Schwaiger, Max, A-5121 Ostermiething (AT)
(74) Vertreter: Hübscher, Helmut, Dipl.-Ing.

(56) Entgegenhaltungen:
- EP-A- 0 096 152
- FR-A- 2 323 983
- US-A- 4 263 506

## Beschreibung

Die Erfindung betrifft ein inkrementales Meßsystem gemäß dem Oberbegriff des Patentanspruches 1, insbesondere ein Längenmeßsystem mit einem Maßstab, auf den eine die vorzugsweise nach optoelektronischen Abtastprinzipien abtastbare Maßstabverkörperung darstellende Meßteilung vorhanden ist.

Bei solchen Meßsystemen, wie sie unter anderem aus der DE-A- 34 45 694 bekannt sind, ist die Maßstabverkörperung über die Abtasteinheit vorzugsweise berührungslos nach optoelektronischen Abtastprinzipien abtastbar. Es sind auch Meßsysteme mit induktiv, magnetisch oder kapazitiv abtastbaren Maßstabverkörperungen und entsprechenden Referenzmarken bekannt. Bei der Abtastung der Maßstabverkörperung werden als Meßsignale periodische, meist in der Grundform sinusförmige Analogsignale erhalten, bei denen ein vollständiger Signalzug einem vollständigen Meßteilungsinkrement zugeordnet ist, das bei optoelektronischer Abtastung aus je einem Hellfeld und einem Dunkelfeld der Maßstabteilung bestehen kann. Bisher werden wenigstens zwei meist um 90° phasenverschobene Meßsignale erzeugt. Abhängig von der Verstellrichtung der Abtasteinheit eilt das eine oder andere Signal vor und die Verstellrichtung wird über einen Richtungsdiskriminator aus diesen Signalen festgestellt. Die analogen Meßsignale werden zu digitalen Zählsignalen verarbeitet. Dabei ist eine elektronische oder rechnerische Unterteilung des Maßstabes möglich, wofür meist ein Mikrocomputer eingesetzt wird. Die digitalen Zählsignale können als Steuersignale für eine Maschine, für Roboter und/oder zur Darstellung des Meßergebnisses auf einer Anzeigeeinheit verwendet werden. Zur Herstellung einer eindeutigen Beziehung zwischen den Zählsignalen und der jeweils abgetasteten Maßstabstelle ist es notwendig, die Zähleinrichtung an vorgegebenen oder vorwählbaren Maßstabstellen auf bestimmte Werte, beispielsweise Null, zu setzen. Dafür werden aus der Referenzspur erhaltene Referenzsignale verwendet. Wird über das Referenzsignal der Zähler oder die Zähleinrichtung auf einen bestimmten Wert gesetzt, dann gibt dieser die Lage eines gewählten Nullpunktes der Anzeige zur jeweiligen Referenzmarke an. Die Anbringung mehrerer Referenzmarken ermöglicht die wahlweise Erzeugung von Referenzimpulsen in verschiedenen Längsbereichen des Maßstabes. Es muß dabei definiert werden, welche Referenzmarke eben angefahren wird, um die Steuerung bzw. Umrechnung auf die jeweilige Maßstabstelle beziehen zu können. Bisher werden aufwendige Steuer- und Schaltsysteme zur Unterscheidung der ausgewählten von den nicht ausgewählten Referenzmarken vorgesehen, wenn man nicht vorzieht, nicht ausgewählte Referenzmarken abzudecken oder zu entfernen, was bei den meist gekapselten Meßsytemen aufwendig ist und nur von geschultem Personal vorgenommen werden kann, wobei eine neuerliche Anbringung zerstörter Referenzmarken nicht möglich ist. An Auswahlsystemen sind bereits aus der DE-OS 18 14 785 mechanische Ein-Ausschalter bekannt, die bei der Verstellung der Abtasteinheit über gesonderte Anschläge betätigt werden und die Auswertungsschaltung nur an vorgewählten Referenzmarken aktivieren. Diese mechanischen Schalter sind nach der DE-AS 25 40 412 durch an vorwählbaren Maßstabstellen anbringbare Magnete zur Betätigung von als Reed-Relais ausgebildeten Auswahlschaltern in der Abtasteinheit ersetzt. Es ist auch bekannt, die Referenzmarken in mehreren Referenzspuren vorzusehen, jeder Spur eine Abtasteinheit zuzuordnen und eine Referenzmarke durch Auswahl der Abtasteinheit der zugeordneten Spur für die Abgabe von Referenzsignalen zu bestimmen. Auch hier fordert die Änderung der Referenzmarken und die Einstellung einen beträchtlichen nur vom Fachmann durchführbaren Arbeits-, Zeit- und Anlagenaufwand. Löschbare Referenzmarken können in kleinen Abständen angebracht werden, wobei alle nicht benötigten Referenzmarken mechanisch entfernt oder überklebt werden müssen. Auch dies hat die schon erwähnten Nachteile. Aus der EP-A-0 239 768 ist deshalb vorgesehen, die einer ausgewählten Referenzmarke in gleicher Teilung benachbarten Referenzmarken zu entfernen und eine doppelte Abtasteinrichtung für die Referenzmarken mit im Teilungsabstand angebrachten Abtastelementen vorzusehen, die in Gegenschaltung verbunden sind, so daß sich die von vorhandenen Referenzmarken erzeugten Referenzsignale gegenseitig aufheben und nur dann ein auswertbares Referenzsignal erhalten wird, wenn eine vorhandene und der Bereich einer entfernten Referenzmarke gleichzeitig abgetastet werden. Dies setzt unter anderem voraus, daß die Teilung in der die Referenzmarken angebracht sind, äußerst exakt gleichmäßig ist und daß auch nicht einmal kleinste Abweichungen der Abtastelemente aus der Sollage zum Maßstab bzw. zur Referenzspur auftreten. Eine spätere Änderung der Auswahl ist auch hier nur mit großem Aufwand oder überhaupt nicht möglich.

Aus der EP-A-0 096 152 ist ein Stellungsgeber für Antriebsanlagen, insbesondere zur Positionsermittlung von Gas-, Brems- und Kupplungsvorrichtungen von Fahrzeugen bekannt, der zur Erzeugung unterscheidbarer Signale auf kurzen Verstellwegen und damit Meßlängen einen Graukeil benützt, der stellungsabhängig zwischen einer Lichtquelle und einem photoelektrischen Empfänger bewegt wird, eine berührungslose Signalerzeugung am photoelektrischen Empfänger ermöglicht und bei dem der Absolutwert des erzeugten Signales der momentanen Relativstellung des Graukeiles zum Empfänger proportional ist. Das erzeugte Signal kann in ein Positionssignal umgewandelt werden. Zur Erhöhung der Sicherheit und zur Erzielung eindeutiger Meßergebnisse ist der Graukeil mit einem Absolutmaßstab einfachster Bauart gekuppelt bzw. einteilig hergestellt, welcher Absolutmaßstab ebenfalls eine Beleuchtungs- und eine Empfangseinrichtung aufweist, wobei über den Absolutmaßstab in der Empfangseinrichtung codierte Positionssignale erzeugt werden können, die in der gemeinsamen Auswertungsschaltung zur Ergänzung der über den Graukeil erzeugten Positionssignale dienen, wobei bei Ausfall eines Systems durch das verbleibende zweite System noch eine Positionsermittlung möglich ist.

Aufgabe der Erfindung ist die Schaffung eines Meßsystems der eingangs genannten Art, bei dem mit schaltungstechnisch geringem Aufwand und dabei hoher Sicherheit eine oder mehrere Referenzmarken zugeordnete Bezugspunkte bestimmt und im Bedarfsfall ohne Eingriff in ein gekapseltes Meßsystem gewählt werden können, wobei im Bedarfsfall auch die Bestimmung der Verstellrichtung vereinfacht werden soll.

Die gestellte Aufgabe wird gelöst, wie im kennzeichnenden Teil des Patentanspruches 1 angegeben.

Die Steuerspur wird nach den gleichen Abtastprinzipien wie die Maßstabverkörperung und die Referenzmarken abgetastet, so daß die Signalerzeugung und -verarbeitung gegenüber den bekannten Ausführungen vereinfacht wird, wobei insbesondere für die Abtastung der Steuerspur mit einfachen Abtasteinrichtungen das Auslangen gefunden wird. Praktisch werden zumindest im Bereich der Referenzmarken an der Steuerspur Signale erzeugt, die sich über die Maßstablänge ändern, so daß praktisch ein zusätzliches, absolutes Meßsystem vorhanden ist. Im Bedarfsfall können aus diesem zusätzlichen Meßsystem sogar Meßsignale abgeleitet werden, die für eine grobe Bestimmung der Lage der Abtasteinheit gegenüber dem Maßstab heranziehbar sind. Die Auswahl von Referenzmarken ist ohne Eingriff in das eigentliche Meßsystem durch Auswahl bzw. Einstellung von Signalpegeln möglich und kann im Bedarfsfall verändert werden.

Nach einer bevorzugten Ausführung weist die Steuerspur eine sich mit der Maßstablänge kontinuierlich ändernde Signalerzeugungscharakteristik auf, so daß der bei der Abtastung erhaltene Signalpegel einen Absolutwert darstellt, der die Stelle des Maßstabes angibt, an dem sich die Abtasteinheit eben befindet. Die Signaländerung bei der Verstellung gibt auch die Verstellrichtung an, so daß im Bedarfsfall auf eigene Richtungserkennungsstufen bei der Auswertung der Meßsignale selbst verzichtet werden kann.

Bei großen Maßstablängen kann es umständlich werden, eine sich über die ganze Maßstablänge in ihrer Signalerzeugungscharakteristik ausreichend ändernde Spur zu erzeugen. Man kann hier verschiedenen Maßstababschnitten Steuerspuren zuordnen, die jeweils aus einem sich hinsichtlich der Signalerzeugungscharakteristik ändernden, und über die Maßstablänge abschnittsweise periodisch wiederholten Teil und einem festen Steuerteil, beispielsweise durchgehenden oder weggelassenen Linien an den beiden Seiten der sich ändernden Spur bestehen, so daß aus den äußeren Linien der Maßstabbereich und aus der sich ändernden Spur die genaue Abtaststelle innerhalb dieses Bereiches diskriminierbar sind.

Wenn die zusätzliche Spur nur zur Bestimmung bzw. Auswahl einzelner Referenzmarken, also nicht als Absolutmaßstab bzw. Richtungserkennungsspur ausgenützt wird, kann die Steuerspur zwischen den Referenzmarken weggelassen sein und/oder eine gleichbleibende Signalerzeugungscharakteristik aufweisen, so daß besonders bei großen Maßstablängen den einzelnen Referenzmarken Spurabschnitte mit deutlich unterschiedlicher Charakteristik zugeordnet werden können. Dabei wird darauf geachtet, daß bei der Abtastung des Maßstabes der sich ändernde Teil der Steuerspur bereits abgetastet wird, ehe die Abtastung der zugeordneten Referenzmarke stattfindet.

Nach einer bevorzugten Ausführung kann die Steuerspur bei optoelektronischer Abtastung und Signalerzeugung aus einem Strichraster bestehen, dessen Dichte und/oder Strichstärke sich über die Maßstablänge ändert. Die Striche können dabei nach einer Möglichkeit in Maßstablängsrichtung und nach der anderen Möglichkeit quer oder in Schräglage zur Maßstablängsrichtung angebracht sein, wobei sich Striche in Maßstablängsrichtung vom einen zum anderen Maßstabende verjüngen können. Nach einer anderen Ausführung besteht die Steuerspur aus einem Punktraster mit sich über die Maßstablänge ändernder Punktedichte und/oder -größe. Die Steuerspur kann in allen Fällen ebenso wie die Referenzspur vorzugsweise gleich bei der Herstellung der Maßstabverkörperung auf photolithographischem Wege angebracht werden.

Nach einer bevorzugten Ausführung weist die Auswertungsschaltung Speicher oder Stellglieder zur Vorgabe von einzelnen Referenzmarken zugeordneten Signalpegeln und eine Vergleicherschaltung auf, die bei Übereinstimmung des durch die Abtastung der Steuerspur erfaßten Pegelwertes mit dem Vorgabewert die Erzeugung eines Referenzsignales an der zugeordneten Referenzmarke bzw. die Weiterleitung dieses Referenzsignales zuläßt. Im einfachsten Fall wird der Pegel über einstellbare Schaltglieder z. B. Potentiometer eingestellt. Ist die Auswertungseinheit mit einem Rechner versehen, kann auch so vorgegangen werden, daß eine auszuwählende Referenzmarke angefahren und der dabei in der Steuerspur auftretende Referenzpegel bzw. ein äquivalenter digitaler Wert in einem Speicher des Rechners gespeichert wird, wobei dieser Wert bei Auswahl dieser Referenzmarke auf die Vergleicherschaltung abgerufen wird. Für solche Festwertspeicher wird man selbstverständlich für den Dauerbetrieb eine Dauerstromversorgung vorsehen. Die Speicher bzw. eingestellten Pegelwerte können im Bedarfsfall ohne Eingriff in das innere Meßsystem verändert werden.

Die Erfindung wird anhand der nachfolgenden Zeichnungsbeschreibung näher erläutert.

In der Zeichnung ist die Erfindung beispielsweise veranschaulicht. Es zeigen
- Fig. 1: in schematischer Darstellungsweise ein nach optoelektronischen Abtastprinzipien arbeitendes inkrementales Meßsystem in Ansicht mit dem Blockschaltschema einer zugeordneten Auswertungseinheit und die
- Fig. 2 bis 4: in vergrößertem Maßstab Ansichten verschiedener Ausbildungen der Steuerspur.

Ein z. B. aus einem Glaskörper bestehender Maßstabkörper 1 kann gemeinsam mit einer entlang des Maßstabes verstellbaren Abtasteinheit 2 in einem nicht dargestellten rohrförmigen Schutzgehäuse untergebracht sein, wobei die Abtasteinheit über ein durch Dichtlippen in einen Schlitz des Rohrgehäuses eingeführtes Schwert od. dgl. verstellt werden kann. Dieses Schwert stellt z. B. auf einer Werkzeugmaschine die Verbindung mit einem Werkzeugschlitten her.

Am Maßstabkörper 1 sind in drei Spuren 3, 4, 5 eine inkrementale Meßteilung 6, abstandsweise angebrachte Referenzmarken 7 und eine Steuerspur 8 angebracht, wobei jede Spur nach optoelektronischen Abtastprinzipien abgetastet werden kann. Für die Meßteilung 6 können vier Abtasteinheiten vorgesehen sein, die aus je einem Abtastgitter und einem photoelektrischen Empfänger bestehen. Die Abtastgitter sind gegeneinander um Teilungsbruchteile versetzt und paarweise in Gegenschaltung verbunden, so daß an zwei Anschlüssen 9 und 10 bei der Abtastung der Meßteilung gegeneinander um 90° phasenverschobene sinusförmige analoge Meßsignale auftreten, die über Leitungen 11, 12 einer Auswertungseinheit 13 zugeführt werden. Für die erwähnten photoelektrischen Empfänger und die noch zu beschreibenden photoelektrischen Empfänger 14, 15 können gesonderte Beleuchtungseinrichtungen vorgesehen werden, wobei eine Abtastung der Spuren 3, 4, 5 im Auflicht-Durchlicht- oder bei dann vorzugsweise verspiegelter Maßstabrückseite im Reflexionslichtverfahren möglich ist.

Der photoelektrische Empfänger 14 ist der Spur 4 zugeordnet und tastet diese Spur durch ein der Ausbildung der Referenzmarken 7 entsprechendes Abtastgitter ab, so daß er in einer einzigen vorbestimmten Relativlage seines Gitters zur jeweiligen Referenzmarke ein charakteristisches, meist sehr steile Flanken aufweisendes Referenzsignal erzeugen kann. Dieses Referenzsignal wird über eine Leitung 16 einer Auswahleinrichtung 17 zugeführt.

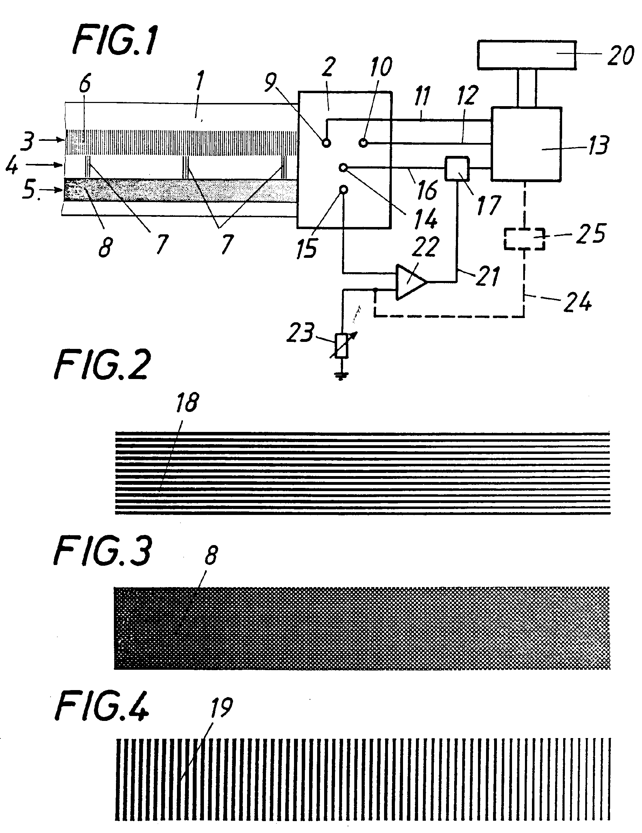

Dem Empfänger 15 ist ein Abtastfenster für die Spur 5 zugeordnet. Diese Steuerspur 5 kann entsprechend den Fig. 2, 3 oder 4, ausgebildet sein, wobei in Fig. 1 eine Steuerspur 8 gemäß Fig. 3 angedeutet wurde. Die Steuerspur 18 nach Fig. 2 ist aus in Maßstablängsrichtung verlaufenden, miteinander einen Raster bildenden Strichen gebildet, die vom linken zum rechten Maßstabende dünner werden. Die Spur 8 nach Fig. 3 besteht aus einem Punktraster mit sich über die Maßstablänge ändernder Punktgröße. Die Spur 19 nach Fig. 4 wieder ist ein Strichraster mit beim Ausführungsbeispiel gleicher Teilung, aber sich über die Maßstablänge verändernder Strichstärke.

Die Beleuchtung des Empfängers 15 durch das Fenster und den momentan abgetasteten Bereich der Spur 8, 18 oder 19 ändert sich daher in Abhängigkeit von der Relativstellung der Abtasteinheit 2 zum Maßstab, also über die Maßstablänge. In gleicher Weise ändert sich das an 15 auftretende Signal. Jeder Maßstabbereich ist also durch einen bestimmten Signalpegel am Empfänger 15 absolut definiert. Die Auswertungseinheit kann eine Maschinensteuerung oder eine Anzeigeeinheit 20 betätigen. Sie kann mit Vor-Rückwärtszählern und/oder einem Rechner ausgestattet sein. In der Auswertungseinheit 13 werden die über 11, 12 zugeführten analogen Meßsignale allenfalls unter elektronischer oder rechnerischer Unterteilung in digitale Zählsignale umgeformt und es wird über einen Richtungsdiskriminator die Zählrichtung bestimmt. Für die Auswahl einer Referenzmarke zur Erzeugung eines wirksamen Referenzsignales dient die Auswahleinrichtung 17. Diese läßt einen über 14 bei der Abtastung einer Referenzmarke 7 erzeugten Referenzimpuls nur dann zur Auswertungseinheit 13 durch, wenn sie über eine Eingangsleitung 21 ein entsprechendes Stellsignal erhält. Nach dem in vollen Linien dargestellten Teil des Schaltschemas besteht die Auswahleinrichtung aus einem als Komparator dargestellten Vergleicher 22, an dessen einem Eingang das von 15 kommende Signal anliegt. Der zweite Eingang des Vergleichers liegt an einem über ein Stellglied 23, beim Ausführungsbeispiel ein einstellbares Potentiometer, einstellbaren Pegel. Nur dann, wenn der eingestellte Pegelwert mit dem an 15 auftretenden Signal übereinstimmt, wird die Auswahleinrichtung 17 durchgeschaltet, so daß der beim Überfahren der zugeordneten Referenzmarke 7 auftretende Referenzimpuls wirksam wird.

Entsprechende Pegelwerte können (meist in digitaler Form) auch in einem Speicher der Auswertungseinheit 13 gespeichert und nach Umformung in Analogwerte über die strichliert angedeutete Leitung 24 an den zweiten Eingang des Vergleichers 22 gelegt werden. Im Zuge der Leitung 24 wurde eine Eingabeeinheit 25 angedeutet, über die bei auf eine auszuwählende Referenzmarke 7 eingestellter Abtasteinheit 2 bzw. 14 ein Speicherbefehl gegeben werden kann, um den im Augenblick der Abtastung dieser Referenzmarke an 15 auftretenden Pegelwert zu erfassen, umzuformen und im Speicher der Auswertungseinheit 13 zu speichern. Eine andere Möglichkeit besteht darin, von Haus aus alle verschiedenen, den einzelnen Referenzmarken 7 zugeordneten Pegelwerte zu speichern und über die Auswahleinrichtung jene Speicherplätze anzusprechen, die den ausgewählten Referenzmarken zugeordnet sind. In allen Fällen kann eine Auswahl von Referenzmarken, an denen ein Referenzimpuls erzeugt werden soll, ohne mechanischen Eingriff in das gekapselte Meßsystem vorgenommen werden.

## Patentansprüche

1. Inkrementales Meßsystem mit einem Maßstab (1), auf dem eine die abtastbare Maßstabverkörperung darstellende Meßteilung (6) vorhanden ist, einer Abtasteinheit (2) mit Abtastelementen (9, 10) zur Erzeugung von Meßsignalen aus der Abtastung der Meßteilung (6) und einer Auswertungseinheit (13) zur Erzeugung von digitalen Zählsignalen aus diesen Meßsignalen, und mit einer zur Meßteilung (6) parallelen, abtastbaren Referenzspur (4) mit mehreren, je einem festen Bezugspunkt zugeordneten Referenzmarken (7), zugeordneten Abtastelementen (14) in der Abtasteinheit (2) und einer Auswertungsschaltung, die eine von einer zusätzlichen Steuerspur (5) mittels Abtastempfänger (15) gesteuerte Auswahleinrichtung (17) zur Erzeugung von Referenzimpulsen nur an auswählbaren Referenzmarken (7) enthält, dadurch gekennzeichnet, daß die Steuerspur (5) als am Maßstab (1) angebrachte, nach den gleichen Abtastprinzipien wie Meßteilung (6) und Referenzmarken (7) abtastbare und sich zumindest im Bereich der Referenzmarken (7) mit der Maßstablänge hinsichtlich ihrer Signalerzeugungscharakteristik ändernde Spur (8, 18, 19) so ausgebildet ist, daß in dem zugeordneten Abtastempfänger (15) im Bereich der verschiedenen Referenzmarken hinsichtlich des Signalpegels unterscheidbare Signale erzeugbar sind, und daß die Auswahleinrichtung (17, 22) auf verschiedene Signalpegel einstellbar ist und ein bei der Abtastung einer Referenzmarke (7) erzeugtes Referenzsignal nur beim gleichzeitigen Auftreten des vorgewählten Signalpegels aus der Abtastung der Steuerspur (5) der Auswertung zuführt.

2. Maßstab als Teil eines Meßsystems nach Anspruch 1, dadurch gekennzeichnet, daß die Signalerzeugungscharakteristik sich Kontinuierlich ändert.

3. Maßstab als Teil eines Meßsystems nach Anspruch 1, dadurch gekennzeichnet, daß die Steuerspur (5) zwischen den Referenzmarken (7) weggelassen ist und/oder eine gleichbleibende Signalerzeugungscharakteristik aufweist.

4. Maßstab nach Anspruch 2 oder 3, dadurch gekennzeichnet, daß die Steuerspur (5) bei optoelektronischer Abtastung und Signalerzeugung aus einem Strichraster (18, 19) besteht, dessen Dichte und/oder Strichstärke sich über die Maßstablänge ändert.

5. Maßstab nach Anspruch 2 oder 3, dadurch gekennzeichnet, daß die Steuerspur (5) bei optoelektronischer Abtastung und Signalerzeugung aus einem Punktraster (8) mit sich über die Maßstablänge ändernder Punktdichte und/oder -größe besteht.

6. Meßsystem nach Anspruch 1, dadurch gekennzeichnet, daß die Auswertungsschaltung (13, 17, 22, 23, 25) Speicher- oder Stellglieder (23) zur Vorgabe von einzelnen Referenzmarken (7) zugeordneten Signalpegeln und eine Vergleicherschaltung (22) aufweist, die bei Übereinstimmung des durch die Abtastung der Steuerspur (5) erfaßten Pegelwertes mit dem Vorgabewert die Erzeugung und Weiterleitung eines Referenzsignales an der zugeordneten Referenzmarke (7) zuläßt.

## Revendications

1. Système de mesure incrémentiel, avec une règle graduée (1), sur laquelle est réalisée une graduation de mesure (6) constituant la matérialisation, pouvant être explorée, de la règle graduée, une unité d'exploration (2), avec des éléments d'exploration (9,10), pour produire des signaux de mesure à partir de l'exploration de la graduation de mesure (6), et une unité d'exploitation (13), pour produire des signaux de comptage numériques à partir de ces signaux de mesure, et avec une piste de référence (4), parallèle à la graduation de mesure (6), pouvant être explorée, dotées de plusieurs marques de référence (7), chacune associée à un point de référence fixe, des éléments d'exploration (14) associés situés dans l'unité d'exploration (2) et un circuit d'exploitation, contenant un dispositif de sélection (17), commandé par une piste de commande additionnelle (5), au moyen de récepteurs d'exploration (15), en vue de produire des impulsions de référence seulement sur les marques de référence (7) susceptibles d'être sélectionnées,
caractérisé en ce que la piste de commande (5) est réalisée sous forme de piste modifiable (8,18,19), placée sur la graduation de mesure (6), susceptible d'être explorée selon les mêmes principes d'exploration que la graduation de mesure (6) et les marques de référence (7) et dont les caractéristiques de production de signaux peuvent être modifiées, au moins dans la zone des marques de référence (7), sur la longueur de la graduation de mesure, la modification étant telle que, dans le récepteur d'exploration (15) associé, dans la zone des différentes marques de référence, des signaux différenciables quant au niveau du signal peuvent être produits, et en ce que le dispositif de sélection (17,22) est réglable à différents niveaux de signaux et ne délivre à l'exploitation un signal de référence, produit lors de l'exploration d'une marque de référence (7), que lorsque se manifeste simultanément le niveau de signal présélectionné, issu de l'exploration de la piste de commande (5).

2. Règle graduée, faisant partie d'un système de mesure selon la revendication 1,
caractérisée en ce que la caractéristique de production de signaux varie de façon continuelle.

3. Règle graduée, faisant partie d'un système de mesure selon la revendication 1,
caractérisée en ce que la piste de commande (5) entre les marques de référence (7) est supprimée et/ou présente une caractéristique de production de signaux constante.

4. Règle graduée selon la revendication 2 ou 3,
caractérisé en ce que, dans le cas où l'exploration et la production de signaux sont optoélectroniques, la piste de commande (5) est composée d'une trame de traits (18,19), dont la densité et/ou la force des traits varie sur la longueur de la règle graduée.

5. Règle graduée selon la revendication 2 ou 3,
caractérisé en ce que, dans le cas où l'exploration et la production de signaux sont optoélectroniques, la piste de commande (5) est composée d'une trame de points (8), dont la densité et/ou la grosseur varie sur la longueur de la règle graduée.

6. Règle graduée selon la revendication 1,
caractérisée en ce que le circuit d'exploitation (13,17,22,23,25) présente des organes de mémoire ou de réglage (23), pour allouer des marques de référence (7) spécifiques de niveaux de signal associés et présente une circuit comparateur (22), permettant la production et la transmission d'un signal de référence à la marque de référence (7) associée, en cas de coïncidence entre la valeur du niveau, mesurée par l'exploration de la piste de commande (5), et la valeur allouée.

## Claims

1. An incremental measuring system comprising a scale (1) bearing graduation marks (6) which embody the scannable scale, a scanning unit (2) with scanning elements (9, 10) for generating measuring signals by scanning the graduation (6), an evaluating unit (13) for generating digital counting signals from the measuring signals, a scannable reference track (4) parallel to the graduation (6) and comprising a number of reference marks (7) each associated with a fixed reference point, associated scanning elements (14) in the scanning unit and an evaluating circuit which comprises a selecting device (17) controlled by an additional control track (5) via scanning receivers (15) so as to generate reference pulses only at selectable reference marks (7), characterised in that the control track (5) is in the form of a track (8, 18, 19) disposed on the scale (1), and scannable on the same basis as the calibration (6) and reference marks (7) and, at least in the region of the reference marks (7), has signal generating characteristics which vary with the length of the scale, the track (8, 18, 19') being so constructed that signals at various levels can be generated in the associated scanning receiver (15) in the region of the various reference marks, and the selecting device (17, 22) is adjustable to various signal levels and supplies a reference signal, generated when scanning a reference mark (7), for evaluation only when the preselected signal level simultaneously occurs as a result of scanning the control track (5).

2. A scale forming part of a measuring system according to claim 1, characterised in that the signal generating characteristic continuously alters.

3. A scale as a part of a measuring system according to claim 1, characterised in that the control track (5) between the reference marks (7) is omitted and/or has a uniform signal generating characteristic.

4. A scale according to claim 2 or 3, characterised in that, in the case of opto-electronic scanning and signal generation, the control track (5) consists of a pattern of lines (18, 19) having a density and/or thickness which varies along the scale.

5. A scale according to claim 2 or 3, characterised in that, in the case of opto-electronic scanning and signal generation, the control track (5) consists of a pattern of dots (8) having a density and/or size which varies along the scale.

6. A measuring system according to claim 1, characterised in that the evaluating circuit (13, 17, 22, 23, 25) comprises storage elements or actuators (23) for presetting signal levels associated with individual reference marks (7) and a comparison circuit (22) which allows a reference signal to be generated and transmitted to the associated reference mark (7) when the preset value coincides with the level detected by scanning the control track (5).
